# EUROPÄISCHE PATENTANMELDUNG

(11) **EP 0 769 680 A1**
(43) Veröffentlichungstag der Anmeldung: **23.04.1997**
(21) Anmeldenummer: 96108893.7
(22) Anmeldetag: 04.06.1996
(51) Int. Cl.: G01F 1/00, G01F 1/58

(54) **Galvanische Elektroden von magnetisch-induktiven Durchflussmessern**

(30) Priorität: 18.10.1995 EP 95116405
(71) Anmelder: Endress + Hauser Flowtec AG, CH-4153 Reinach BL 1 (CH)
(72) Erfinder: Hafner, Peter, Dr., 4410 Liestal, BL (CH); Schäfer, Robert, Dr., 4108 Witterswil, BL (CH); Unterseh, Roland, 68300 Saint Louis (FR)
(74) Vertreter: Morstadt, Volker, Dipl.-Ing. c/o Endress + Hauser Flowtec AG

(57) **Zusammenfassung**

Diese galvanischen Elektroden (3, 4) umfassen eine die Flüssigkeit berührende Stirnfläche (32, 42) und einen Elektrodenschaft (31, 41), der in eine in der Wand des Meßrohrs (1) angeordnete Bohrung (15) derart eingesetzt ist, daß die Impedanz der Elektrode gegenüber den Eigenschaften, dem, insb. momentanen, Zustand der Flüssigkeit oder dem Meßrohr, insb. der kapazitive Anteil der Impedanz konstant ist, und/oder daß eine von der Flüssigkeit benetzte Fläche der Elektrode, die Benetzungsfläche, unter veränderlichem Druck, unter veränderlicher Temperatur oder unter veränderlicher Zusammensetzung der Flüssigkeit konstant ist.

## Beschreibung

Die Erfindung betrifft galvanische Elektroden von Durchflußaufnehmern von magnetisch-induktiven Durchflußmessern.

Mit magnetisch-induktiven Durchflußmessern läßt sich bekanntlich der Volumendurchfluß einer elektrisch leitenden Flüssigkeit, die in einem Meßrohr fließt, messen. Der die Flüssigkeit berührende Teil des Meßrohrs ist i.a. elektrisch nicht-leitend, damit eine nach dem Faraday'schen Induktionsgesetz von einem das Meßrohr durchsetzenden Magnetfeld in der Flüssigkeit induzierte elektrische Spannung nicht kurzgeschlossen wird.

Metall-Meßrohre sind daher üblicherweise innen mit einer elektrisch nicht-leitenden Schicht versehen und auch i.a. nicht-ferromagnetisch; bei vollständig aus einem Kunststoff oder aus einer Keramik, insb. Aluminiumoxid-Keramik, bestehenden Meßrohren ist die elektrisch nicht-leitende Schicht demgegenüber nicht erforderlich.

Die erwähnte induzierte Spannung wird mittels mindestens zwei galvanischen, also von der Flüssigkeit an einer Stirnfläche benetzten, oder mittels mindestens zwei kapazitiven, also z.B. innerhalb der Wand des Meßrohrs angeordneten, Elektroden abgegriffen, die im einfachsten Fall diametral einander gegenüberliegend so angeordnet sind, daß ihr gemeinsamer Durchmesser senkrecht zur Richtung des erwähnten Magnetfelds ist.

Galvanische Elektroden sind üblicherweise in eine Bohrung in der Wand des Durchflußaufnehmers flüssigkeitsdicht eingesetzt. Dies gelingt z.B. nach der JP-A 4 - 290 919, insb. Fig. 6, dadurch, daß ein Elektrodenschaft der Elektrode einerseits einen kleineren Durchmesser als die Bohrung aufweist, der Elektrodenschaft andererseits jedoch mit mehreren Dichtlippen versehen ist. Problematisch dabei ist jedoch, daß durch das Einbringen der Elektrode sich mechanische Spannungen im Material ergeben, in das die Bohrung eingebracht ist oder mit dem sie ausgekleidet ist.

Solche mechanischen Spannungen führen im Falle von Kunststoff dazu, daß dieser "fließt", d.h. der der mechanischen Spannung ausgesetzte Teil des Kunststoffs weicht in spannungsfreie Bereiche, insb. zum Inneren des Meßrohrs hin, aus und bildet dort Vorwölbungen, die den Durchmesser des Meßrohrs örtlich verringern und somit das Strömen der Flüssigkeit unzulässig beeinflussen. Dies ließe sich dadurch reduzieren, daß die Dichtlippen nur im flüssigkeits-abgewandten Teil der Bohrung vorgesehen werden.

Im Bereich zwischen der benetzten Stirnfläche und der am nächsten liegenden Dichtlippe ist die vorbeschriebene Elektrode nicht vollständig dicht, da sich dort zwischen der Innenwand der Bohrung und der Mantelfläche des Elektrodenschafts ein hinsichtlich seiner Wirkung bisher unbeachteter Spalt befindet.

Wie Untersuchungen gezeigt haben, dringt die Flüssigkeit in diesen Spalt in Abhängigkeit von ihrem Druck und/oder von ihrer Temperatur und/oder von ihrem Zustand und/oder von ihrer Art bzw. chemischen Zusammensetzung mehr oder weniger weit ein. Dadurch hat die Elektrode eine zeitlich nicht konstante Benetzungsfläche und demzufolge auch eine zeitlich nicht konstante elektrische Impedanz.

Dies bedingt, daß der bei jeder galvanischen Elektrode a priori schon vorhandenen elektrochemischen Störspannung ein zusätzlicher, zeitlich nicht konstanter Störspannungs-Anteil überlagert wird. Dieser ist jedoch mit an sich üblichen Kompensationsmaßnahmen, wie sie z.B. in der US-A 43 82 387 und der US-A 44 22 337 beschrieben sind, nicht vollständig beherrschbar.

Die in der GB-A 11 53 295, in der GB-A 20 47 409 und in der GB-A 20 57 692 beschriebenen Elektroden versuchen das Dichtheitsproblem des Elektrodenschafts durch Maßnahmen zu lösen, die mit denen der obigen JP-A vergleichbar sind.

So ist bei der GB-A 11 53 295 eine die Elektrode aufnehmende Öffnung des metallischen Meßrohrs nach außen durch einen angeschweißten Ansatz verlängert, in den hinein sich der elektrisch nicht-leitende Teil, der sogenannte Liner, erstreckt. Der Elektrodenschaft ist mit einem geringfügig konisch zulaufenden Isolierteil umgeben, das mittels einer Preßpassung im Ansatz befestigt ist und somit die Stirnfläche den Elektrodenschaft abzudichten sucht. Der durch die Preßpassung auf den Liner ausgeübte Druck kann somit ebenfalls dessen oben erwähnte Vorwölbung bewirken, zumal die Stelle des größten Drucks sich kurz hinter der Stirnfläche befindet.

Bei der Elektrode der GB-A 20 47 409 ist deren Stirnfläche zu einem Elektrodenkopf erweitert, an dessen vom Lumen des Meßrohrs abgewandter Hinterseite eine umlaufende Kralle ausgebildet ist, die das Material des Liners in die einen größeren Durchmesser als der Elektrodenkopf aufweisende Öffnung hineinzieht. Diese auf Zug beanspruchte Stelle des Liners ist aber nicht ausreichend temperaturwechselbeständig.

Auch die Elektrode nach der GB-A 20 57 692 hat einen Elektrodenkopf mit erweitertem Durchmesser, der den Liner in die Öffnung für den Elektrodenschaft zieht, so daß die eben erwähnte Temperaturwechsel-Beständigkeit an dieser Stelle ebenfalls schlecht ist.

Ferner hat die Elektrode nach dieser GB-A 20 57 692 einen in eine zentrale Längsbohrung des Elektrodenschafts mehr oder weniger dicht eingesetzte, becherförmige Hülse, von der die Außenseite ihres Bodens mit der Stirnfläche der Elektrode fluchtet, so daß sich eine durchgehende Vollstirnfläche ergibt.

Allerdings scheint nach den Fig. 3, 5 und 8 dieser GB-A 20 57 692 dem Spalt zwischen der Hülse und der Elektrode keine Bedeutung beigemessen zu werden, denn in Fig. 3 ist kein Spalt, dagegen ist in den Fig. 5 und 8 ein enger Spalt gezeichnet, ohne daß die Beschreibung ihn erwähnt oder erläutert. Aufgrund der gezeichneten Länge und Enge dieses Spaltes kann angenommen werden, daß Kapillarkräfte wirken und somit die Flüssigkeit in Abhängigkeit von den Betriebsbedingungen und ihrem Zustand mehr oder weniger weit in den Spalt eindringt. Somit liegt auch hier wie bei der Elektrode nach der eingangs erwähnten JP-A 4 - 290 919 eine konstante Benetzungsfläche der Elektrode nicht vor.

Zur Lösung dieser aus dem referierten Stand der Technik sich ergebenden Gesamtproblematik, also zur Schaffung einer praktisch absolut dichten Elektrode und gegebenenfalls auch einer Elektrode mit hochkonstanter Benetzungsfläche, besteht die Erfindung daher in einer galvanischen Elektrode eines Durchflußaufnehmers eines magnetisch-induktiven Durchflußmessers, mit dem der Volumendurchfluß einer elektrisch leitenden, in einem Meßrohr strömenden Flüssigkeit zu messen ist, dessen die Flüssigkeit berührender Teil elektrisch nicht-leitend ist, welche Elektrode
- eine die Flüssigkeit berührende Stirnfläche und
- einen Elektrodenschaft umfaßt,
   -- der in eine in einer Wand des Meßrohrs angeordnete Bohrung derart eingesetzt ist,
      --- daß die Impedanz der Elektrode gegenüber den Eigenschaften und/oder gegenüber dem, insb. momentanen, Zustand der Flüssigkeit und/oder gegenüber dem Meßrohr, insb. der kapazitive Anteil der Impedanz konstant ist, und/oder
      --- daß eine von der Flüssigkeit benetzte Fläche der Elektrode, im folgenden deren Benetzungsfläche, unter veränderlichem Druck der Flüssigkeit und/oder unter veränderlicher Temperatur der Flüssigkeit und/oder unter veränderlicher Zusammensetzung der Flüssigkeit konstant ist.

Nach einer ersten Ausgestaltung der Erfindung ist nur die Stirnfläche der Elektrode die Benetzungsfläche, wobei in weiterer Ausgestaltung der Elektrodenschaft in die Bohrung mit einer dauernden mechanischen Vorspannung eingesetzt ist.

In diesem Fall ist es besonders vorteilhaft, wenn der Elektrodenschaft mindestens eine Stelle mit verringertem Durchmesser aufweist, die unter Druck ausweichendes Material des nicht-leitenden Teils des Meßrohrs aufnimmt.

In Weiterbildung kann die Oberfläche des Elektrodenschafts und/oder die Bohrung eine die Oberflächenspannung erhöhende Schicht aufweisen und/oder die Bohrung in einem die Oberflächenspannung erhöhenden Material angebracht sein.

Nach einer zweiten Ausgestaltung der Erfindung bilden
- sowohl die Stirnfläche
- als auch eine unter veränderlichem Druck der Flüssigkeit und/oder unter veränderlicher Temperatur der Flüssigkeit und/oder unter veränderlicher Zusammensetzung der Flüssigkeit immer konstant bleibende, an die Stirnfläche angrenzende Fläche des Elektrodenschafts die Benetzungsfläche.

In weiterer Ausgestaltung kann
- zwischen dem Elektrodenschaft und der Bohrung ein zum vollständigen Eindringen der Flüssigkeit ausreichend weiter Spalt vorgesehen und/oder
- die Bohrung in einem Material gebildet oder damit ausgekleidet sein,
   -- das eine so geringe Oberflächenspannung hat, daß die Flüssigkeit in den Spalt vollständig eindringt.

In Weiterbildung der zweiten Ausgestaltung kann die Oberfläche des Elektrodenschafts eine die Oberflächenspannung erniedrigende Schicht aufweisen.

Die Erfindung wird nun anhand der Figuren der Zeichnung näher erläutert, in der Ausführungsbeispiele dargestellt und gleiche Teile mit denselben Bezugszeichen versehen sind.

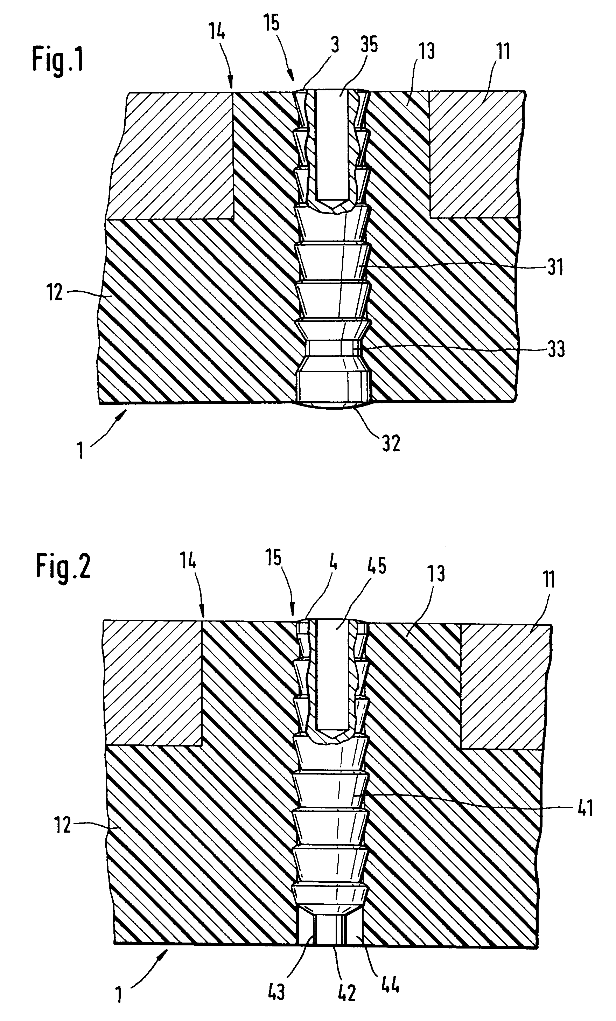

- Fig. 1: zeigt im Schnitt ein erstes Ausführungsbeispiel, und
- Fig. 2: zeigt im Schnitt ein zweites Ausführungsbeispiel.

In den Fig. 1 und 2 ist jeweils ausschnittsweise und zur besseren Erkennbarkeit der Details nicht maßstäblich ein Meßrohr 1 eines Durchflußaufnehmers eines magnetischinduktiven Durchflußmessers gezeigt. Es umfaßt ein Metallrohr 11 und einen eine darin strömende, elektrisch leitende Flüssigkeit berührenden Teil 12, deren Volumendurchfluß zu messen ist. Der Teil 12 ist elektrisch nicht-leitend, kann also z.B. aus einem geeigneten Kunststoff oder einem geeigneten Kautschuk bestehen.

Es kann auch ein einstückiges elektrisch nicht-leitendes Meßrohr, also ein vollständig aus einem geeigneten Kunststoff, einem geeigneten Kautschuk oder einer geeigneten Keramik bestehendes Meßrohr, verwendet werden, wenn dessen Wandstärke zur Aufnahme einer galvanischen Elektrode ausreichend dick bemessen ist; in diesem Fall kann also auf des Metallrohr 11 verzichtet werden.

In den Ausführungsbeispielen erstreckt sich der elektrisch nicht-leitende Teil 12 unter Bildung eines zylinderförmigen Ansatzes 13 durch eine in der Rohrwand des Metall-Rohrs 11 angebrachte Bohrung 14 hindurch. Diese hat bevorzugt einen konstanten Durchmesser. Der Ansatz 13 hat eine weitere Bohrung 15 mit einem gegenüber dem Durchmesser der Bohrung 14 kleineren konstanten Durchmesser.

In den Fig. 1 und 2 ist in der Bohrung 15 ein Elektrodenschaft 31 bzw. 41 einer die Flüssigkeit berührenden Elektrode 3 bzw. 4 angeordnet, der darin derart eingesetzt ist, daß eine Stirnfläche 32 bzw. 42 des Elektrodenschafts 31 bzw. 41 von der Flüssigkeit benetzbar ist und die Impedanz der Elektrode gegenüber den Eigenschaften und/oder gegenüber dem, insb. momentanen, Zustand der Flüssigkeit und/oder gegenüber dem Meßrohr, insb. der kapazitive Anteil der Impedanz, konstant ist.

Wie Untersuchungen nämlich gezeigt haben, muß diese Impedanz und insb. deren kapazitiver Anteil von in der strömenden Flüssigkeit auftretenden Druckänderungen und auch von Druck- oder Schlagbelastungen unabhängig sein, die von außen auf das Meßrohr 1 einwirken.

Beim Ausführungsbeispiel der Fig. 1 ist der Elektrodenschaft 31 in die Bohrung 15 so eingesetzt, daß nur die Stirnfläche 32 die Benetzungsfläche ist. Dies wird bevorzugt dadurch erreicht, daß der Elektrodenschaft 31 in die Bohrung mit einer dauernden mechanischen Vorspannung eingesetzt ist und eine Stelle 33 mit, insb. stark, verringertem Durchmesser aufweist, die Material des nicht-leitenden Teils 12 des Meßrohrs 1 aufzunehmen in der Lage ist.

Es ist also an der Elektrode 3 oder in deren unmittelbarer Nachbarschaft ein Bereich vorgesehen, in den unter der mechanischen Spannung "fließendes" Material ausweichen kann. Somit bilden sich an der Innenwand des Meßrohrs keine Vorwölbungen, die den Strömungsquerschnitt örtlich verkleinern.

Zur besonders sicheren Verhinderung des Eindringens von Flüssigkeit in den Spalt zwischen Bohrung 15 und Elektrode 3 kann die Oberfläche des Elektrodenschafts 31 und/oder die Bohrung 15 eine die Oberflächenspannung erhöhende Schicht aufweisen und/oder die Bohrung 15 in einem die Oberflächenspannung erhöhenden Material angebracht sein. Hierfür eignet sich besonders Polytetrafluorethylen.

In Fig. 2 ist eine galvanische Elektrode 4 mit einem Elektrodenschaft 41 und einer Stirnfläche 42 gezeigt, durch welche die Konstanz der erwähnten Impedanz auf eine andere oder zusätzliche Art erzielt werden kann. Es ist nämlich zusätzlich zur Stirnfläche 42 noch eine bei allen Betriebsbedingungen konstant bleibende Fläche 43 des Elektrodenschafts 41 von der Flüssigkeit dauernd benetzt.

Dazu ist in Fig. 2 zwischen dem Elektrodenschaft 41 und der Bohrung 15 ein so ausreichend weiter Spalt 44 vorgesehen, daß die Flüssigkeit unter allen Betriebsbedingungen und bei allen Zuständen der Flüssigkeit in ihn vollständig eindringen kann.

Dabei kann das Material des elektrisch nicht-leitenden Teils 12 eine so geringe Oberflächenspannung haben, daß die Flüssigkeit in den Spalt 44 vollständig eindringt, wobei die Oberfläche des Elektrodenschafts 41 bevorzugt eine die Oberflächenspannung erniedrigende Schicht aufweisen kann.

In den Fig. 1 und 2 ist der nicht benetzte Teil des Elektrodenschafts 31 bzw. 41 in die Bohrung 15 möglichst flüssigkeitsdicht eingesetzt, wozu die üblichen Maßnahmen zu ergreifen sind. Eine davon ist in den Figuren gezeigt, nämlich den Elektrodenschaft 31 bzw. 41 mit hintereinander liegenden kegelstumpf-förmigen Abschnitten zu versehen, in denen sich das Material, in dem die Bohrung 15 angebracht ist, verkrallt.

In den Ausführungsbeispielen hat der Elektrodenschaft 31 bzw. 41 a seinem von der Stirnfläche 32 bzw. 42 abgewandten Ende jeweils eine Buchse 34 zum Anschluß einer Zuleitung zur Elektrode 3 bzw. 4. Selbstverständlich ist auch jede andere übliche Art der Verbindung der Zuleitung mit der Elektrode möglich.

## Patentansprüche

1. Galvanische Elektrode (3, 4) eines Durchflußaufnehmers eines magnetisch-induktiven Durchflußmessers, mit dem der Volumendurchfluß einer elektrisch leitenden, in einem Meßrohr (1) strömenden Flüssigkeit zu messen ist, dessen die Flüssigkeit berührender Teil (12) elektrisch nicht-leitend ist, welche Elektrode
- eine die Flüssigkeit berührende Stirnfläche (32, 42) und
- einen Elektrodenschaft (31, 41) umfaßt,
-- der in eine in einer Wand des Meßrohrs angeordnete Bohrung (15) derart eingesetzt ist,
--- daß die Impedanz der Elektrode gegenüber den Eigenschaften und/oder gegenüber dem, insb. momentanen, Zustand der Flüssigkeit und/oder gegenüber dem Meßrohr, insb. der kapazitive Anteil der Impedanz konstant ist, und/oder
--- daß eine von der Flüssigkeit benetzte Fläche der Elektrode, im folgenden die Benetzungsfläche, unter veränderlichem Druck der Flüssigkeit und/oder unter veränderlicher Temperatur der Flüssigkeit und/oder unter veränderlicher Zusammensetzung der Flüssigkeit konstant ist.

2. Galvanische Elektrode nach Anspruch 1, bei der nur die Stirnfläche (32) die Benetzungsfläche ist.

3. Galvanische Elektrode nach Anspruch 2, bei der der Elektrodenschaft (31) in die Bohrung (15) mit einer dauernden mechanischen Vorspannung eingesetzt ist.

4. Galvanische Elektrode nach Anspruch 3, bei der der Elektrodenschaft (31) eine Stelle (33) mit verringertem Durchmesser aufweist, die unter Druck ausweichendes Material des nicht-leitenden Teils des Meßrohrs aufnimmt.

5. Galvanische Elektrode nach Anspruch 2, bei der die Oberfläche des Elektrodenschafts (31) und/oder die Bohrung (15) eine die Oberflächenspannung erhöhende Schicht aufweisen und/oder die Bohrung in einem die Oberflächenspannung erhöhenden Material angebracht ist.

6. Galvanische Elektrode nach Anspruch 1, bei der
- sowohl die Stirnfläche (42)
- als auch eine unter veränderlichem Druck der Flüssigkeit und/oder unter veränderlicher Temperatur der Flüssigkeit und/oder unter veränderlicher Zusammensetzung der Flüssigkeit immer konstant bleibende, an die Stirnfläche (42) angrenzende Fläche (43) des Elektrodenschafts (41) die Benetzungsfläche bilden.

7. Galvanische Elektrode nach Anspruch 6, bei der
- zwischen dem Elektrodenschaft (41) und der Bohrung (15) ein zum vollständigen Eindringen der Flüssigkeit ausreichend weiter Spalt (44) vorgesehen ist und/oder
- die Bohrung in einem Material gebildet oder damit ausgekleidet ist,
-- das eine so geringe Oberflächenspannung hat, daß die Flüssigkeit in den Spalt (44) vollständig eindringt.

8. Galvanische Elektrode nach Anspruch 6 oder 7, bei der die Oberfläche des Elektrodenschafts (41) eine die Oberflächenspannung erniedrigende Schicht aufweist.
